# EUROPÄISCHE PATENTSCHRIFT

(11) **EP 0 472 680 B1**
(45) Veröffentlichungstag und Bekanntmachung des Hinweises auf die Patenterteilung: **08.02.1995**
(21) Anmeldenummer: 91904495.8
(22) Anmeldetag: 23.02.1991
(51) Int. Cl.: F02M 51/08, F02M 61/16, B23K 26/00

(54) **ELEKTROMAGNETISCH BETÄTIGBARES VENTIL**
SOLENOID VALVE
VANNE ELECTROMAGNETIQUE

(30) Priorität: 17.03.1990 DE 4008675
(43) Veröffentlichungstag der Anmeldung: 04.03.1992
(73) Patentinhaber: ROBERT BOSCH GMBH, 70442 Stuttgart (DE)
(72) Erfinder: VOGT, Dieter, D-7015 Korntal-Münchingen 2 (DE); BABITZKA, Rudolf, D-7141 Kirchberg-Beuhof (DE)
(86) Internationale Anmeldenummer: DE9100152
(87) Internationale Veröffentlichungsnummer: WO9114864

(56) Entgegenhaltungen:
- EP-A- 0 276 078
- EP-A- 0 352 445
- DE-A- 3 102 642
- Patent Abstracts of Japan, Band 7, Nr. 211 (M-243)(1356), 17. September 1983; & JP-A-58107870 (NIPPON DENSO), 27. Juni 1983

## Beschreibung

### Stand der Technik

Die Erfindung geht aus von einem elektromagnetisch betätigbaren Ventil nach der Gattung des Hauptanspruchs. In der deutschen Patentanmeldung P 38 25 135.3 oder DE-A-3 102 642 ist bereits ein elektromagnetisch betätigbares Ventil vorgeschlagen worden, bei dem der metallene Ventilschließkörper mit dem metallenen Verbindungsrohr durch Löten oder Schweißen verbunden ist. Da der Ventilschließkörper eine große metallische Härte aufweist, ergeben sich Probleme bezüglich einer sicheren und zuverlässigen sowie spannungsfreien Verbindung von Ventilschließkörper und Verbindungsrohr.

### Vorteile der Erfindung

Das erfindungsgemäße Ventil mit den kennzeichnenden Merkmalen des Hauptanspruchs hat demgegenüber den Vorteil, daß auf einfache Art und Weise eine sichere und zuverlässige sowie spannungsfreie Verbindung des metallisch weichen Verbindungsrohres mit dem demgegenüber aus metallisch härterem Material bestehenden Ventilschließkörper erzielbar ist. Entsteht bei der relativ schnellen Erstarrung der an dem Ventilschließkörper ausgebildeten ersten punktförmigen Verschweißung ein Riß in dieser, so wird der Riß mittels der zwischen der ersten punktförmigen Verschweißung und dem Verbindungsrohr ausgebildeten zweiten punktförmigen Verschweißung gefüllt, so daß eine hohe Festigkeit der Verbindung gewährleistet ist.

Durch die in den Unteransprüchen aufgeführten Maßnahmen sind vorteilhafte Weiterbildungen und Verbesserungen des im Hauptanspruch angegebenen Ventils möglich.

Eine umlaufende Schweißnaht zwischen dem Verbindungsrohr und dem Ventilschließkörper hat den Vorteil einer besonders festen und zuverlässigen Verbindung von Verbindungsrohr und Ventilschließkörper.

Weist das Verbindungsrohr einen das Verbindungsrohr in Längsrichtung auftrennenden Längsschlitz auf, so ist es besonders vorteilhaft, wenn die Schweißnaht im Bereich des Längsschlitzes unterbrochen ist, sonst besteht die Gefahr, daß beim Schweißen Schweißspritzer und Schweißperlen im Rohrinnern des Verbindungsrohres entstehen, die sich im Betrieb des Einspritzventils lösen können. Außerdem verringert sich die Bearbeitungszeit.

Vorteilhaft ist es auch, wenn die Schweißung zwischen dem Verbindungsrohr und dem Ventilschließkörper aus zumindest zwei einzelnen, unterbrochenen Schweißnähten ausgebildet ist. Hierdurch wird beim Schweißen die Wärmeeinbringung in den Ventilschließkörper und damit der durch die Wärmeeinbringung verursachte Verzug des Ventilschließkörpers verringert, so daß die Dichtheit zwischen dem Ventilschließkörper und einem mit dem Ventilschließkörper zusammenwirkenden Ventilsitz aufgrund besserer Deckungsgleichheit gewährleistet ist.

Ist das Verbindungsrohr in Längsrichtung durch einen Längsschlitz aufgetrennt, so ist es bei einer den Anker mit dem Verbindungsrohr verbindenden Verschweißung von Vorteil, wenn die Schweißnaht zumindest im Bereich des Längsschlitzes unterbrochen ist. Auch bei dieser Verschweißung ist sonst nicht auszuschließen, daß beim Schweißen Schweißspritzer und Schweißperlen im Rohrinnern des Verbindungsrohres entstehen, die sich im Betrieb des Einspritzventils lösen können.

Besonders vorteilhaft ist es, wenn die Schweißung mittels eines Lasers ausgebildet ist, um den Wärmefluß in die miteinander zu verschweißenden Teile und damit das Verziehen aufgrund der Temperatureinwirkung möglichst gering zu halten und eine exakte, sichere und zuverlässige Verschweißung zu erzielen.

### Zeichnung

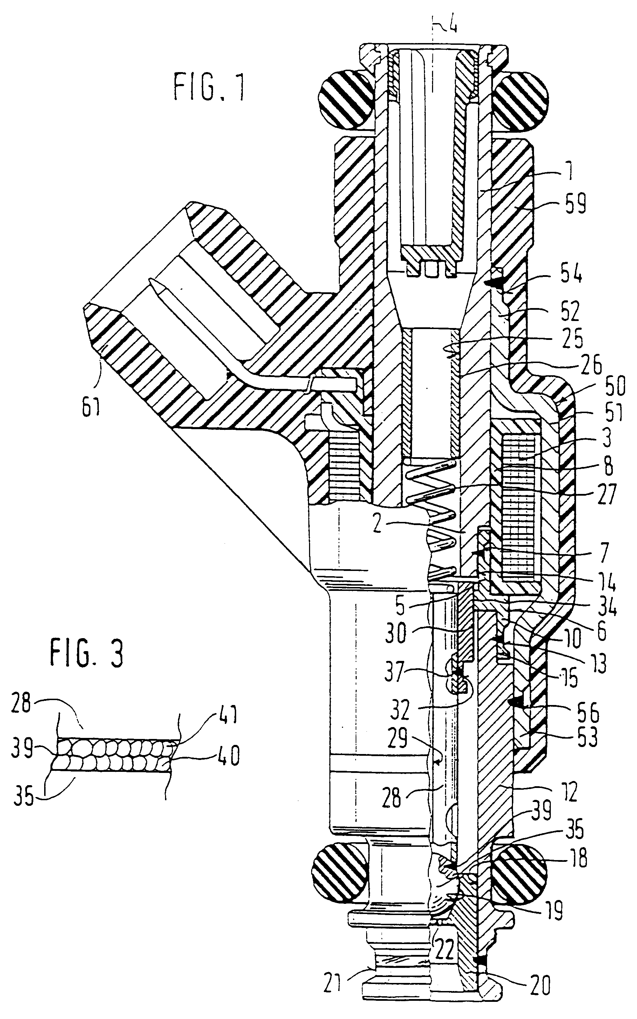

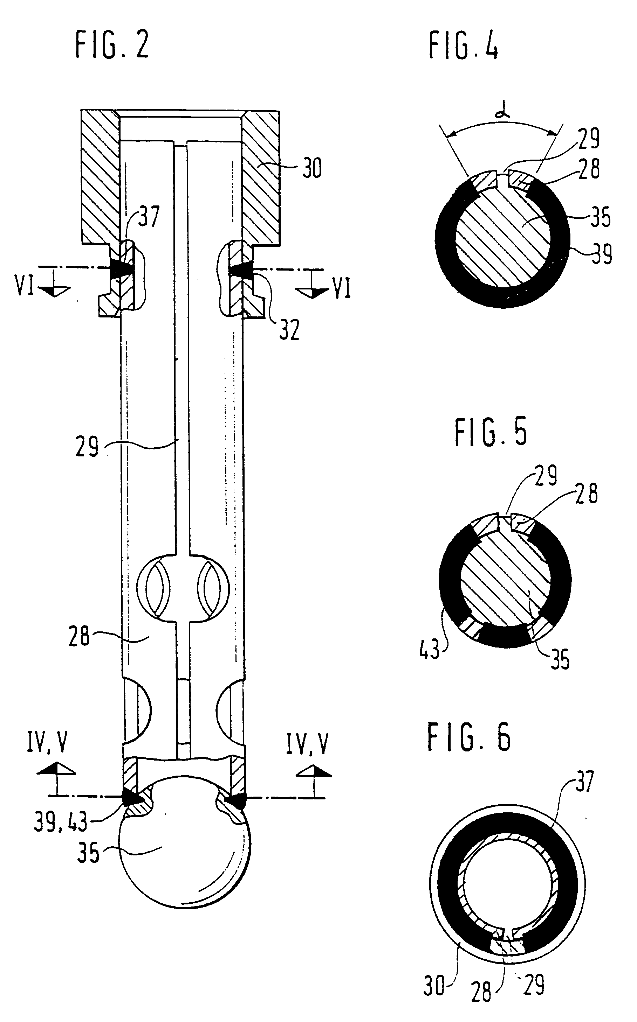

Ausführungsbeispiele der Erfindung sind in der Zeichnung vereinfacht dargestellt und in der nachfolgenden Beschreibung näher erläutert. Es zeigen Figur 1 ein Ausführungsbeispiel eines erfindungsgemäß ausgestalteten Ventils, Figur 2 eine aus Anker, Verbindungsrohr und Ventilschließkörper bestehende Ventilnadel, Figur 3 eine erfindungsgemäße Schweißnaht, Figur 4 ein erstes Ausführungsbeispiel eines Schweißnahtverlaufs in einem Schnitt entlang der Linie IV-IV in Figur 2, Figur 5 ein zweites Ausführungsbeispiel eines Schweißnahtverlaufs in einem Schnitt entlang der Linie V-V in Figur 2 sowie Figur 6 einen Schnitt entlang der Linie VI-VI in Figur 2.

### Beschreibung der Ausführungsbeispiele

Das in der Figur 1 beispielsweise dargestellte elektromagnetisch betätigbare Ventil in Form eines Einspritzventils für Brennstoffeinspritzanlagen von Brennkraftmaschinen hat einen von einer Magnetspule 3 umgebenen Kern 1, der rohrförmig ausgebildet ist und über den die Brennstoffzufuhr erfolgt. Anschließend an ein unteres Kernende 2, auf dem die Magnetspule 3 mit ihrem Spulenkern 8 angeordnet ist, ist konzentrisch zu einer Ventillängsachse 4 dicht mit dem Kern 1 ein das Kernende 2 umfassender erster Verbindungsabschnitt 5 eines rohrförmigen metallenen Zwischenteiles 6 mittels beispielsweise einer in einer am Umfang des ersten Verbindungsabschnittes 5 ausgebildeten Querschnittsverringerung verlaufenden Schweißnaht verbunden. Ein einen größeren Durchmesser als der erste Verbindungsabschnitt 5 aufweisender zweiter Verbindungsabschnitt 10 des Zwischenteiles 6 umgreift ein rohrförmiges metallenes Verbindungsteil 12 und ist mit diesem mittels einer in einer am stromabwärtigen Ende des zweiten Verbindungsabschnitts 10 ausgebildeten Querschnittsverringerung 13 ausgeführten Schweißung verbunden. Um kleine Außenmaße des Einspritzventils zu ermöglichen, umgreift der erste Verbindungsabschnitt 5 einen Halteabsatz 14 des Kernendes 2, der einen geringeren Außendurchmesser als der Kern 1 hat, und der zweite Verbindungsabschnitt 10 umgreift einen ebenfalls mit geringerem Außendurchmesser als im angrenzenden Bereich ausgebildeten Halteabsatz 15 des Verbindungsteiles 12.

An dem dem Kern 1 abgewandten Ende des Verbindungsteiles 12 ist in einer Haltebohrung 18 ein einen festen Ventilsitz 19 aufweisender Ventilsitzkörper 20 eingeschweißt, wobei die Schweißung in einer Querschnittsverringerung 21 des Verbindungsteiles 12 verläuft. Die Aneinanderreihung von Kern 1, Zwischenteil 6, Verbindungsteil 12 und Ventilsitzkörper 20 stellt somit eine dichte, starre metallene Einheit dar. Stromabwärts des Ventilsitzes 19 ist im Ventilsitzkörper 20 wenigstens eine Abspritzöffnung 22 ausgebildet.

Eine in eine Strömungsbohrung 25 des Kerns 1 eingepreßte Verschiebehülse 26 dient zur Einstellung der Federvorspannung einer an der Verschiebehülse 26 anliegenden Rückstellfeder 27, die sich mit ihrem stromabwärts gerichteten Ende an einem beispielsweise einen Längsschlitz 29 aufweisenden metallenen Verbindungsrohr 28 abstützt.

Mit dem der Rückstellfeder 27 zugewandten Ende des Verbindungsrohres 28 ist durch Schweißung ein Anker 30 verbunden, in dessen dem Kernende 2 abgewandt ausgebildeter Querschnittsverringerung 32 eine Schweißung verläuft. Das rohrförmige Zwischenteil 6 dient mit einem Führungsbund 34 zugleich als Führung für den Anker 30. Am anderen Ende des Verbindungsrohres 28 ist dieses mit einem mit dem Ventilsitz 19 zusammenwirkenden, z. B. als Kugel aus einem oberflächengehärteten Stahl ausgebildeten Ventilschließkörper 35 durch Schweißen verbunden.

In Figur 2 ist eine aus Anker 30, Verbindungsrohr 28 und Ventilschließkörper 35 bestehende Ventilnadel stark vergrößert dargestellt. Die Schweißung zwischen Anker 30 und Verbindungsrohr 28 ist beispielsweise, wie in der Figur 6 als Schnitt entlang der Linie VI-VI in Figur 2 dargestellt, als umlaufende Schweißnaht 37 ausgebildet, die nur im Bereich des Längsschlitzes 29 des Verbindungsrohres 28 unterbrochen ist. So ist bei hoher Festigkeit und Zuverlässigkeit der Schweißung gewährleistet, daß beim Schweißen keine Schweißspritzer und Schweißperlen in das Rohrinnere des Verbindungsrohres 28 gelangen, die sich im Betrieb des Einspritzventils lösen können.

Die Figur 3 zeigt eine erfindungsgemäße Schweißnaht 39 zwischen dem beispielsweise aus V2A-Stahl ausgebildeten Verbindungsrohr 28 und dem aus metallisch demgegenüber härteren Material bestehenden Ventilschließkörper 35. Abwechselnd wird zunächst der metallisch härtere Ventilschließkörper 35 mit einer ersten punktförmigen Verschweißung 40 versehen und danach diese erste punktförmige Verschweißung 40 mit dem metallisch weicheren Verbindungsrohr 28 durch eine zweite punktförmige Verschweißung 41 verschweißt, bis zwischen dem Ventilschließkörper 35 und dem Verbindungsrohr 28 die zumindest teilweisende umlaufende Schweißnaht 39 ausgebildet ist.

Das hat zur Folge, daß bei der relativ schnellen Erstarrung der an dem Ventilschließkörper ausgebildeten ersten punktförmigen Verschweißung auftretende Risse mittels der zwischen der ersten punktförmigen Verschweißung und dem Verbindungsrohr ausgebildeten zweiten punktförmigen Verschweißung gefüllt werden, so daß eine hohe Festigkeit der Verbindung gewährleistet ist.

Wie die einen Schnitt entlang der Linie IV-IV in Figur 2 zeigende Figur 4 darstellt, ist die Schweißnaht 39 im ersten Ausführungsbeispiel im Bereich des Längsschlitzes 29 des Verbindungsrohres 28 unterbrochen, da sonst die Gefahr besteht, daß beim Schweißen Schweißspritzer und Schweißperlen im Rohrinnern des Verbindungsrohres entstehen bzw. ins Rohrinnere gelangen, die sich im Betrieb des Einspritzventils lösen können. Die Schweißnaht 39 ist in dem beispielsweise dargestellten, durch den Winkel beschriebenen Bereich unterbrochen. Der Winkel beträgt z. B. zwischen 25 und 45°.

In einem zweiten Ausführungsbeispiel ist, wie in der Figur 5 als Schnitt entlang der Linie V-V in Figur 2 dargestellt, eine den Ventilschließkörper 35 mit dem Verbindungsrohr 28 verbindende Schweißnaht 43 nicht nur im Bereich des Längsschlitzes 29 des Verbindungsrohres 28, sondern außerdem in zwei weiteren Bereichen unterbrochen, so daß die Schweißnaht 43 dreiteilig ausgebildet ist. Hierdurch wird beim Schweißen die Wärmeeinbringung in den Ventilschließkörper 35 und damit der durch die Wärmeeinbringung verursachte Verzug des Ventilschließkörpers 35 verringert und so die Dichtheit zwischen dem Ventilschließkörper 35 und dem Ventilsitz 19 gewährleistet.

Es ist aber auch möglich, daß bei einem keinen Längsschlitz aufweisenden Verbindungsrohr die Schweißnaht umlaufend ausgebildet ist, um eine einfach herzustellende, besonders feste und zuverlässige Verbindung zu schaffen.

Die Magnetspule 3 ist von wenigstens einem, im Ausführungsbeispiel als Bügel ausgebildeten, als ferromagnetisches Element dienenden Leitelement 50 in axialer Richtung vollständig und in Umfangsrichtung zumindest teilweise umgeben. Das Leitelement 50 ist mit seinem Bereich 51 an die Kontur der Magnetspule 3 angepaßt, ein sich radial nach innen erstreckender oberer Endabschnitt 52 umgreift teilweise den Kern 1, ein unterer Endabschnitt 53 teilweise das Verbindungsteil 12. Der obere Endabschnitt 52 ist mit seinem dem Ventilschließkörper 35 abgewandten Ende mit dem Kern 1 beispielsweise durch eine in einer einfachen Querschnittsverringerung 54 des oberen Endabschnittes 52 ausgebildeten Verschweißung verbunden. Mit seinem unteren Endabschnitt 53 ist das Leitelement 50 z. B. mittels Schweißen in einer Querschnittsverringerung 56 des unteren Endabschnittes 53 mit dem Verbindungsteil 12 verbunden.

Die Schweißungen sind in den erfindungsgemäßen Ausführungsbeispielen mittels eines Lasers ausgebildet, um den Wärmefluß in die miteinander zu verschweißenden Teile möglichst gering zu halten und eine exakte, sichere und zuverlässige Verschweißung zu erzielen. Bei zu hohem Wärmefluß in die Teile besteht die Gefahr, daß diese sich unter der Temperatureinwirkung verziehen und eine zuverlässige Funktion des Ventils nicht mehr gewährleistet ist.

Mindestens ein Teil des Kerns 1 und die Magnetspule 3 in ihrer gesamten axialen Länge sind durch eine Kunststoffummantelung 59 umschlossen, die auch wenigstens noch das Zwischenteil 6 und einen Teil des Verbindungsteils 12 umschließt. Ein elektrischer Anschlußstecker 61, über den die elektrische Kontaktierung der Magnetspule 3 und damit deren Erregung erfolgt, ist an die Kunststoffummantelung 59 angeformt.

Die erfindungsgemäße Verschweißung von dem metallisch weichen Verbindungsrohr 28 und dem aus metallisch demgegenüber härterem Material bestehenden Ventilschließkörper 35 bildet eine sichere und zuverlässige Verbindung zwischen Verbindungsrohr 28 und Ventilschließkörper 35 aus, ohne daß die erste punktförmige Verschweißung 40 oder die zweite punktförmige Verschweißung 41 Risse aufweisen. Um beim Schweißen den Wärmefluß in den Ventilschließkörper 35 zu verringern und/oder bei dem den Längsschlitz 29 aufweisenden Verbindungsrohr 28 das Entstehen von Schweißspritzern und Schweißperlen im Rohrinnern zu verhindern, ist die Schweißnaht 39 unterbrochen ausgebildet.

## Patentansprüche

1. Elektromagnetisch betätigbares Ventil, insbesondere Einspritzventil für Brennstoffeinspritzanlagen von Brennkraftmaschinen, mit einem von einer Magnetspule umgebenen Kern (1), mit einem dem Kern zugewandten Anker (30), der mit einem metallenen Verbindungsrohr (28) verbunden ist, das an seinem dem Anker abgewandten Ende mit einem metallenen Ventilschließkörper (35) durch Schweißung verbunden ist, dadurch gekennzeichnet, daß das Verbindungsrohr (28) aus metallisch weichem und der Ventilschließkörper (35) aus metallisch demgegenüber härterem Material besteht und die Schweißung zwischen dem Verbindungsrohr (28) und dem Ventilschließkörper (35) derart erfolgt, daß abwechselnd zunächst der härtere Ventilschließkörper (35) mit einer ersten punktförmigen Verschweißung (40) und danach diese erste punktförmige Verschweißung (40) mit dem weicheren Verbindungsrohr (28) durch eine zweite punktförmige Verschweißung (41) verschweißt wird, bis zwischen dem Verbindungsrohr (28) und dem Ventilschließkörper (35) eine zumindest teilweise umlaufende Schweißnaht (39) ausgebildet ist.

2. Ventil nach Anspruch 1, dadurch gekennzeichnet, daß die Schweißung zwischen dem Verbindungsrohr (28) und dem Ventilschließkörper (35) als umlaufende Schweißnaht ausgebildet ist.

3. Ventil nach Anspruch 1, mit einem das Verbindungsrohr in Längsrichtung auftrennenden Längsschlitz, dadurch gekennzeichnet, daß die Schweißnaht (39) im Bereich des Längsschlitzes (29) unterbrochen ist.

4. Ventil nach Anspruch 1, dadurch gekennzeichnet, daß die Schweißung zwischen dem Verbindungsrohr (28) und dem Ventilschließkörper (35) aus zumindest zwei einzelnen, unterbrochenen Schweißnähten ausgebildet ist.

5. Ventil nach Anspruch 3, mit einer den Anker mit dem Verbindungsrohr verbindenden Schweißung, dadurch gekennzeichnet, daß die Schweißnaht (37) zumindest im Bereich des Längsschlitzes (29) unterbrochen ist.

6. Ventil nach einem der Ansprüche 1 bis 5, dadurch gekennzeichnet, daß die Schweißung mittels eines Lasers ausgebildet ist.

## Claims

1. Electromagnetically operable valve, in particular an injection valve for fuel-injection systems of internal-combustion engines, having a core (1) surrounded by a magnet coil, having an armature (30) which faces the core and is connected to a metal connecting pipe (28) connected by welding, at its end facing away from the armature, to a metal valve-closing element (35), characterized in that the connecting pipe (28) consists of metallically soft material and the valve-closing element (35) consists of, by contrast, metallically harder material, and the weld between the connecting pipe (28) and the valve-closing element (35) is realized in such a way that, alternately, firstly the harder valve-closing element (35) is welded to a first punctiform welding (40) and afterwards this first punctiform welding (40) is welded to the softer connecting pipe (28) by a second punctiform welding (41), until between the connecting pipe (28) and the valve-closing element (35) there is formed an at least partially encircling weld seam (39).

2. Valve according to Claim 1, characterized in that the weld between the connecting pipe (28) and the valve-closing element (35) is formed as an encircling weld seam.

3. Valve according to Claim 1, having a longitudinal slot which divides the connecting pipe in the longitudinal direction, characterized in that the weld seam (39) is interrupted in the region of the longitudinal slot (29).

4. Valve according to Claim 1, characterized in that the weld between the connecting pipe (28) and the valve-closing element (35) is formed out of at least two individual, interrupted weld seams.

5. Valve according to Claim 3, having a weld connecting the armature to the connecting pipe, characterized in that the weld seam (37) is interrupted at least in the region of the longitudinal slot (29).

6. Valve according to one of Claims 1 to 5, characterized in that the weld is formed by means of a laser.

## Revendications

1. Vanne pouvant être actionnée de façon électromagnétique, en particulier injecteur pour systèmes d'injection de carburant de moteurs à combustion interne, avec un noyau (1) entouré par une bobine d'électro-aimant avec une armature (30) tournée vers le noyau qui est reliée à un tube de liaison métallique (28) relié à son extrémité située à l'opposé de l'armature à un corps métallique de fermeture de la vanne (35) par soudage, vanne caractérisée en ce que le tube de liaison (28) est en une matière métallique molle et le corps de fermeture de la vanne (35) est en une matière métallique par contre dure et le soudage a lieu entre le tube de liaison (28) et le corps de fermeture de la vanne (35) de telle façon que l'on soude alternativement d'abord le corps de fermeture de la vanne (35) plus dur par un premier soudage en forme de points (40) et ensuite le premier soudage en forme de points (40) au tube de liaison plus tendre (28) par un deuxième soudage en forme de points (41), jusqu'à ce que soit constitué entre le tube de liaison (28) et le corps de fermeture de la vanne (35) un cordon de soudure (39) faisant au moins en partie le tour.

2. Vanne selon la revendication 1, caractérisée en ce que le soudage entre le tube de liaison (28) et le corps de fermeture de la vanne (35) est constitué sous la forme d'un cordon de soudure faisant le tour.

3. Vanne selon la revendication 1, avec une fente longitudinale qui sépare le tube de liaison dans le sens longitudinale, vanne caractérisée en ce que le cordon de soudure (39) est interrompu dans la zone de la fente longitudinale (29).

4. Vanne selon la revendication 1, caractérisée en ce que le soudage entre le tube de liaison (28) et le corps de fermeture de la vanne (35) est constitué par au moins deux cordons de soudure différents, interrompus.

5. Vanne selon la revendication 3, avec un soudage reliant l'armature au tube de liaison, vanne caractérisée en ce que le cordon de soudure (37) est interrompu au moins dans la zone de la fente longitudinale (29).

6. Vanne selon l'une des revendications 1 à 5, caractérisée en ce que le soudage est effectué au moyen d'un laser.
